# EUROPEAN PATENT SPECIFICATION

(11) **EP 2 957 619 B1**
(45) Date of publication and mention of the grant of the patent: **01.08.2018**
(21) Application number: 15020091.3
(22) Date of filing: 15.06.2015
(51) Int. Cl.: C10B 53/00, C10B 19/00, C10L 3/08, C10K 3/00, C10K 1/00, C10K 1/10, A62D 3/40

(54) **600°C METHANIZER FOR THE TREATMENT OF ORGANIC COMPOUNDS**
600°C-METHANISIERER ZUR BEHANDLUNG VON ORGANISCHEN VERBINDUNGEN
MÉTHANISEUR À 600°C POUR LE TRAITEMENT DE COMPOSÉS ORGANIQUES

(30) Priority: 19.06.2014 IT VI20140155
(43) Date of publication of application: 23.12.2015
(73) Proprietor: Marchesin, Mauro, 36040 Brendola (VI) (IT); Ghiotto, Giannino, 36040 Brendola (IT)
(72) Inventor: Marchesin, Mauro, 36040 Brendola (VI) (IT); Ghiotto, Giannino, 36040 Brendola (IT)

(56) References cited:
- GB-A- 2 499 329
- RU-C1- 2 283 186
- US-A- 1 828 781
- US-A- 4 332 584

## Description

### The problem

The field of art to which the invention relates is waste management, which, as suggested by European regulations, at present includes reduction at primary sources, differentiated waste collection, recycling, composting and, fi nally, disposal in landfills or various forms of thermal valorisation. Other techniques of waste management include the conversion of waste into energy with the involvement of processes such as incineration and gasification. There are many types of waste, including urban solid waste, commercial and industrial waste products, refuse-derived fuel (RDF), electronic waste, medical waste and hazardous wastes, and also the problematical forms of tannery sludge. Undifferentiated urban solid waste, also known as solid waste or urban refuse, mainly comprises paper, cardboard, plastics, textiles, glass, metals, biodegradable waste (e.g. kitchen waste, small wood scraps), inert waste, such as dirt, and may include small quantities of various materials such as batteries, light bulbs, medicines, chemicals and fertilizers. However, the exact compositions may vary from region to region, depending on the levels of recycling and depending on the extent of differentiated collection carried out in a parti cular area. Another form of waste management includes the pyrolysis: an existing technique which is steadily evolving. A pyrolysis reactor differs from a gasifier, because work in absence of oxygen (a hot flow of an inert gas such as nitrogen is often used), while a gasifier, which in fact works in the presence of small amounts of oxygen, also achieves partial oxidation and as a form of technology represents a compromise between the incinerator and the pyrolysis reactor. A pyrolysis system, bearing in mind the organic nature of the raw material of the process, involves chemical dissociations and re-associations which make it possible to 'break up' a complex molecule into simpler parts by application of suitable thermal conditions. This process provides two different products: a solid fraction referred to as 'char' and a volatile fraction, which in turn is subdivided into a liquid component (caused by the condensation of the volatile fraction of the products) and a gaseous component, referred to as pyrolysis gas or syngas (synthesis gas). The char is composed mainly of the carbonaceous residue of the organic matter, ash, inert, metal s etc., and the liquid fraction is mainly composed of tar, water and different organic substances (oils), while the gaseous fraction consists primarily of hydrogen, methane, ethylene, ethane, carbon oxides and other combustible gases. Such components are produced in reciprocal percentages and proportions, depending on the thermodynamic and reaction conditions under which the pyrolysis process occurs (fast, slow, or conventional). The cleaned synthesis gases may be used to generate energy from combustion directly in a gas turbine, boiler or reci procati ng engine, and the waste heat can be used for the generation of steam which can provide additional energy through a steam turbine. Syngas may also be used for the production of hydrogen or liquid fuels or chemical products, gaseous fuels, synthetic natural gas and carbon monoxide, some of which can be used as raw materials in the manufacture of other chemical products such as plastic. The pyrolysis then generates added-value compounds and/or energy from organic materials. Currently, however, pyrolyzers found on the market have significant technical shortcomings as they are mostly experimental prototypes and not very reliable. For example, they present difficulties with respect to the cleaning of syngas and serious difficulties, for preventing oxygen entering in the system. The latter condition causes oxidation of the organic compound, creating a myriad of potentially explosive and pollutant compounds that are difficult to treat and which, at the end of the process, are often expelled in a rather primitive manner through flues or chimneys. The absence of oxygen in some cases is obtained only with waste loads having an established size, which have to wait until the moment of evacuation of the preceding loads, which in turn wait until the oven returns to its optimal temperature to complete the process. Finally, they have to wait until completion of the operation involving the extraction of oxygen (potentially explosive if mixed) from the intermediate chamber in order to repeat the cycle, and this requires the use of special and expensive double sealing valves to keep the system pressurized. These technical issues are the cause of general malfunctions but in particular they decrease the reaction speed of the pyrolysis itself, preventing a correct cycle and dramatically increasing the time required to process the mixture. Some companies do not even provide detailed data concerning the composition of the gas in relation to the type of compound introduced. This is quite a common situation and these firms will then often drone on, presenting almost always unreliable data on atmospheric emissions or they promise to permit guided visits to non-existent plants on dates to be defined according to the requests received. D1 GB 2 499 329 A (SLG TECHNOLOGY LTD [GB]) discloses a thermal energy plant for and process of utilising waste from the tanning process. D2 US 4 332 584 A (MURALIDHARA HS) discloses a method of recovering chromium values and potential energy from liquid and solid leather tannery wastes. D3 R U 2283186C1 (OAO SF NIIOGAZ [RU]) discloses an electric precipitator for cleaning of gases. D4 US 1 828 781 A (LORING MERRILL RALPH) discloses a load siphon system with screws.

### The solution

One of the challenges in the realization of a process of pyrolysis of organic compounds is that the variable nature of incoming wastes may result in a gas widely variable in its composition at the point of output from the pyrolysis reactor. With respect to the current pyrolysis technique and the traditional cleaning process (bag filters, cyclones, scrubbers, activated carbon etc.) adopted by it the changes we have made present a new method for the cleaning of syngas, a much faster process speed and the possibility to easily treat the compound in the absence of oxygen, which would allow for oxidation of the organic compounds and thus the formation of polluting elements. The major changes to the process also allow for the production of a very pure, hydrogen-rich gas. However, the modifications also have the advantage of simplifying the process, drastically lowering the costs involved in its preparation, maintenance and management, and which are not even comparable with those typical of current gasification or thermal valorisation plants. Finally, and not less importantly, it is necessary to consider that a process thus configured allows for a continuous 24-hr cycle with a constant introduction of the compound and without delays or stops required to gradually attain the proper operating temperature.

We will now consider by way of an example the particular and serious issue of the treatment of tannery sludge, a process which may be dealt with using our methodology.

From the beating of skins to liming and chrome tanning, dyeing and final colouring or finishing, the tanning process continues to produce wastes, such as hair and skin from the hides that have just arrived (organic material), conservation salts and other substances, including sulphides, chlorides and especially trivalent chromium (Cr III). These waste materials end up in waters subsequently treated with depurators and the purification process creates as a by-product a predominantly organic material, consisting of bacterial flora, which is subject to proliferation in the process but also collects certain inorganic substances (metals). This product is referred to as :sludge', because it presents a significant level of water content. Attempts are made to reduce this through filtering operations, pressing, centrifugation and drying. The sludge emits a nauseating smell that can be detected also at a distance of many kilometres. The main pollutant produced by a tanning district is chromium, which is directly used in the type of tanning prevalent in such areas. Tanning has the aim of irreversibly stabilizing leather, which, from a putrescible material becomes imputrescible. Chrome tanning is so called on account of the fact that chromium salts are used in the tanning process. This is the most common method worldwide because it offers countless possibilities for processing and finishing in the production of a very wide range of final articles. It is precisely this flexibility of use that has made chrome-tanned leather ideal for a wide range of applications in the clothing, furniture, leather goods and footwear sectors. Trivalent chromium (Cr III) is a micronutrient for the body, and essential for some enzymatic and low-toxicity reactions even when it is ingested at relatively high doses. The danger of such a substance is linked to the fact that if it is heated in the presence of sufficient oxygen, it is transformed into hexavalent chromium (Cr VI), which is a highly pollutant substance. The latter is a toxic element also in small concentrations and is a human carcinogen; it is very irritating for the skin, mucous membranes and the eyes, and can cause inflammatory lesions of the respi ratory tract. The other important issue is related to the very high costs incurred for filtering, pressing, centrifuging and drying the sludge, which, at the end of the process, is usually stored in polypropylene sacks having a capacity of 1.5 m³ and transferred to landfills. In our case we start with the filtered and pressed sludge, immediately eliminating the costly centrifuge operations and drying, and immediately obtaining an advantage in economic and managerial terms but, above all, ensuring positive results from the outset at the environmental level, also eliminating the need for storage in sacks.

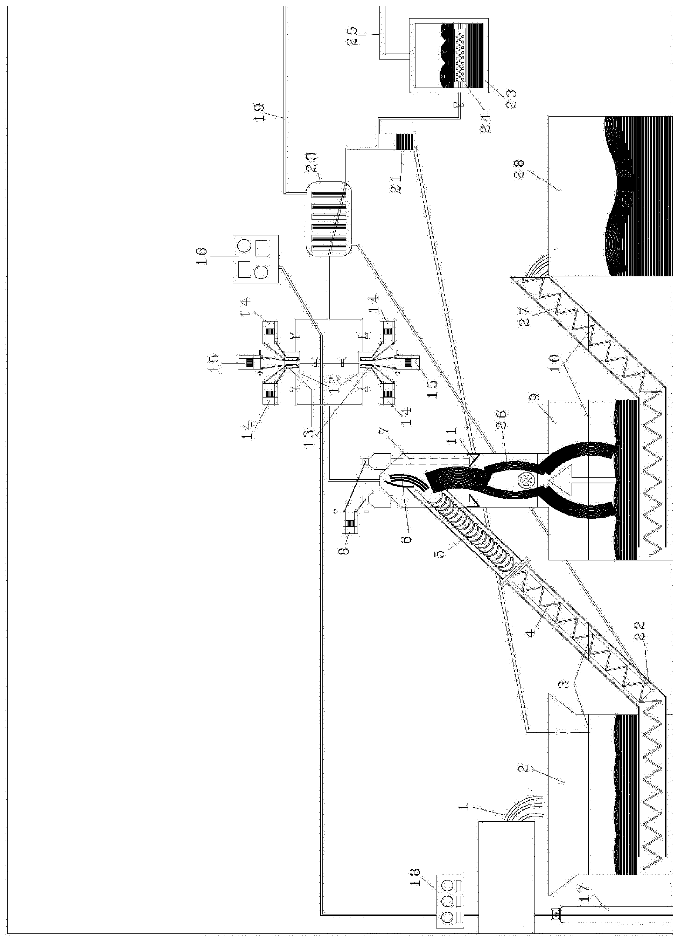

Our solution will be highlighted in greater detail in the description provided below and illustrated schematically in the enclosed drawing No. 1

As shown in the drawing, the sludge (1) is poured into a hopper (2), which has a particular siphon structure and contains liquid (3), such as the liquid obtained through the compaction of the sludge itself or waste leachate. This structure prevents the entry of oxygen into the system, which would obviously facilitate oxidation of the metals present. It is important to note that, particularly in our case, it prevents the oxidation of trivalent chromium (Cr III), which, also due to a high temperature, would evolve into the hazardous pollutant known as hexavalent chromium (Cr VI) described above. Through loading and discharge valves, a level indicator allows the liquid (3) in the loading hopper (2) and the liquid (10) in the pre-discharge tank (9) to always remain at the same level, between 20 cm and 50 cm, enabling the system to maintain the anoxic state and making it possible to maintain a constant internal pressure between 20 mbar and 50 mbar. At this point the long loading screw (4), which passes through and reaches the end of the tubular reheating oven (5), accompanies and compacts the sludge for entry into the oven. More or less forced compacti on leads to variation in the percentage of moisture present in the sludge and also leads to a reflux of the liquid in excess, which becomes useful in the loading hopper. It is important to note that a deliberate inclination of about 45° of the loading screw and the oven allows for continuous, homogeneous and regular introduction of the compound, avoiding accumulations of the compound and avoiding rapid temperature inversions that are inconvenient for the process. In addition, it allows the liquid and tarry fraction of the compound to flow out towards the centre of the oven, facilitating a prolonged stationing of the fraction itself and thus allowing for longer and total evaporation. This situation represents a complete process of gasification of all the solid/liquid elements and maximizes the production of gas, while drastically decreasing the production of tar. Of course, it is also possible to vary the speed of the loading screw according to the type of compound introduced in order to maximize the production of gases. Subsequently, by means of induction heating or gas the oven (5) will maintain a maximum temperature between 530°C and 570°C, which is monitored by analogical instruments connected to temperature-detection sensors. The temperature allows for the evaporation, sublimation and dissociation of all chains of the organic compounds present and therefore of all hydrocarbons, excluding, however, the dissociation of methane, which dissociates at a slightly higher temperature (580°C / 600°C) and thus preserving the structural integrity of this important and fundamental hydrocarbon. Subjecting the very first fumes (6) to a very intense electric field of 20 kV (principle of electrostatic precipitators) supplied to bars (7) through a transformer (8) powered with alternating current (220 V and 200 W) and rectified with direct current, many ion-electron couples are created within the gas. The (positive) ions will be attracted by the negative electrode (discharge electrode), while the electrons will tend to move towards the positive electrode (collector electrode). In this way negative ions are formed, which, in order to achieve greater stability tend to become adsorbed by the particles of particulate present in the fumes. This is referred to as the "Corona Discharge Effect". The particulate, which in itself is neutral and is therefore not affected in any way by the presence of an electric field, is in fact charged and tends to move towards the collector electrode, where, once it comes into contact with the same, it loses its charge and descends along the walls of the pre-discharge tank (9), becoming deposited in special containers (11). The basic elements of the syngas that are partially cleaned now pass through an innovative intense cleaning system consisting of two chambers (12). These are identical but have gas circuits that are separate and function alternately to allow for the removal of the chambers, maintenance, the collection of metals that have been attracted by the electrostatic field and also to allow for routine cleaning without the need to stop the whole process. Each chamber is composed of two electric resistors (13) which can reach very high temperatures and close to 1500°C to the touch and is also composed of a thermostat which maintains the ambient temperature of the chamber (12) between 530°C and 570°C. The average temperature of the resistors, which are switched on and off to maintain the situation, will vary between 1000°C and 1200°C to the touch, this being more than sufficient for the purpose of destroying harmful molecules. The resistors are supported by transformers (14) (input 220 V, output 6.2 V, 166 Amp, 1024 W). They are also polarized by means of transformers, always having a capacity of 20 kV (15), powered with alternating current (220 V and 200 W) and rectified by direct current, with each resistor being associated with a transformer pole. The electrostatic field which is created, associated with the high temperature of the resistors, captures metals and harmful molecules, which are destroyed. These include dioxins, furans, anhydrides etc., although, working in a complete absence of oxygen, the process itself does not facilitate their formation. The next stage includes a gas analyzer (16), which analyzes the composition of the gas in real time and introduces the required hydrogen (17) through a common pressure regulator (18). The input hydrogen has a 'cicatrizing' effect and impedes the re-composition of the harmful molecules which may have escaped from the previous stage and facilitates the formation of the :Sabatier reaction" or :Sabatier process' as the carbon dioxide, reacting with the hydrogen and in the presence of nickel as a catalyst, produces methane and water. The methane output from this stage has a temperature of around 550°C, and to make it usable in the subsequent stages it is necessary to lower its temperature. Exchanging but not mixing one part of it with 15 parts of air at ambient temperature (19) by means of a traditional air/air heat exchanger (20), we will obtain for both a levelling-off of the temperature correspondi ng to about 37°C. A part of the previously evaporated hydrocarbon, following the thermal exchange and thus after cooling, will return to settle in a tank (21) in the liquid state and may be re-introduced as an integral liquid (3) in the loading hopper.

Moreover, the heat produced by the exchange reaction can be used for a partial preheating of the sludge if it is introduced into the outer chamber (22) of the loading screw. In the last stage, in a water bath (23) containing salts, polarized elements (traditional electro-plating) allow for the attraction once again of what remains of the very last impurities in the gas (if any are present). Excess water formed by the steam produced during the process will also settle at this stage and the excess water may also be withdrawn as an integral liquid (3) in the loading hopper. Furthermore, the subsequent bubbling of gas (24) through the water, as occurs in marshes, allows for its distillation, and hence the name 'swamp gas' (discovered by Alessandro Volta in 1778). At the point of output from this stage (25) the gas is composed primarily of methane and is available for routine use and/or the self-sustaining of the process. Finally, the resulting compound/ash (26), equal to approximately 3% of the input waste, is expelled through the compacting auger (27) and discharged into containers (28). It is very important to note that our process occurs without the use of flues, and is conceived to allow for the recovery of metals and fine particles which have been collected by the polarized bars (7), the resistors (13), the containers (11) and, finally, by the water bath (23), and they may be subsequently separated and used as raw materials for industrial purposes. It appears evident that what has been referred to up to this point will result in technical and economic advantages highly significant for the process itself. Furthermore, in this case, the methodology eliminates costly operations such as the centrifuging of the sludge, drying and storage in bags. From the above description it is clear that the finding achieves the intended objectives and, in particular, the goal of making available a highly efficient apparatus for the pyrolysis of organic compounds which minimizes production costs, maintenance and management, resulting in an effective contribution to the problem of waste disposal in general without causing harm to the environment.

## Claims

1. An apparatus for the pyrolytic conversion of organic compounds in general, such as tanning sludge, manure, vegetable biomass, animal biomass, manure, undifferentiated municipal solid wastes, leachate, into METHANE (CH₄) and **characterized in that** it comprises:
- a loading hopper (2) for the organic compound (1) containing liquid (3);
- a loading screw (4) for the organic compound;
- a tubular heating oven (5) in which the organic compound, introduced via the loading hopper (2) containing liquid (3) and the loading screw (4), is made to react to convert it into volatile organic compounds at a temperature between 530°C and 570°C;
- a pre-discharge storage unit (9) containing liquid (10) connected to the tubular heating oven (5) outlet, wherein said pre-discharge storage unit (9) comprises a discharge screw (27) for discharging of the resulting compound/ash (26) and containers (11) for recovery of particulates separated by an electric field and descending along the walls of the pre-discharge storage unit (9), wherein the pre-discharge storage unit (9) further comprises two bars (7) connected to a 20 kV transformer (8) for subjecting the fumes (6) to an electric field;
- two syngas purification chambers (12) each of which comprising two 1500°C resistors (13) equipped with two transformers (14), and connected to another 20 kV transformer (15) to allow for initiation of the subsequent electrostatic field which attracts metals and by means of the temperature of the resistors, destroys harmful molecules, such as dioxins and furans, wherein the syngas purification chambers (12) are connected to the gas outlet of the pre-discharge storage unit (9);
- a gas analyzer (16) for analyzing the gas composition, located downstream with respect to the two syngas depuration chambers (12);
- a heat exchanger (20), located downstream with respect to the gas analyzer (16), to lower the temperature of the gas;
- a tank (23), located downstream with respect to the heat exchanger (20), said tank (23) comprising a gas outlet (25) and containing water, salts and immersed electrodes powered by direct current for capturing the last impurities, if any are present, by bubbling of the gas (24) through the water;
- a collection tank for condensed liquid (21), which collects the condensate that may develop after the cooling process by the heat exchanger (20), allowing for their re-introduction at the start of the same.

2. An apparatus according to claim 1, **characterized in that** the loading hopper (2) and the pre-discharge storage unit (9) are configured to allow the compound to enter and exit the system through siphoning, thereby enabling the system to maintain the anoxic state.

3. An apparatus according to claim 1, **characterized in that** the loading screw (4) and the tubular oven (5) are tilted through approximately 45°, wherein the loading screw passes through the entire length of the tubular heating oven (5).

4. An apparatus according to claim 1, that the loading hopper (2) and the pre-discharge storage unit (9) are configured to enable the system to maintain a constant internal overpressure comprised between 20 and 50 millibars (mbar).

5. An apparatus according to claim 1, **characterized in that** the pre-discharge tank (9) comprises two bars (7) connected to a rectified 20 kV transformer (8) capable of allowing the creation of an electrostatic field that serves to attract initial metals and harmful molecules.

6. An apparatus according to claim 1, **characterized in that** each of the two syngas purification chambers (12) contains 2 electric resistors (13) that reach temperatures in the region of 1500°C configured to be supplied with two transformers (14) with an input voltage of 220 volts and an output voltage of 6.2 volts, 166 amperes, 1,024 watts and connected to another 20 kV transformer (15) configured to be supplied with alternating current at 220 volts and 200 watts, and rectified with direct current to allow for initiation of an electrostatic field which serves to capture the metals and other harmful molecules, including dioxins, furans etc, which will be destroyed by the high temperature of the resistors.

7. Apparatus according to claim 1, **characterized in that** the two syngas purification chambers (12) are separate and allow for alternate operation of the same to carry out maintenance and the collection of the metals that have been attracted by the electrostatic field, but, above all, to avoid stopping the process.

## Patentansprüche

1. Vorrichtung zur pyrolytischen Umwandlung von organischen Verbindungen im Allgemeinen, wie Gerbschlamm, Gülle, pflanzliche Biomasse, tierische Biomasse, Mist, undifferenzierte Siedlungsabfälle, Sickerwasser, in METHAN (CH4) und **dadurch gekennzeichnet, dass** es Folgendes umfasst:
- einen Einfülltrichter (2) für die organische Verbindung (1) mit Flüssigkeit (3);
- eine Ladeschnecke (4) für die organische Verbindung;
- einen Rohrheizofen (5), in dem die organische Verbindung, die über den Einfülltrichter (2) mit Flüssigkeit (3) und die Einfüllschraube (4) zugeführt wird, zur Reaktion gebracht wird, um sie bei einer Temperatur zwischen 530°C und 570°C in flüchtige organische Verbindungen umzuwandeln;
- eine Vorauslass-Speichereinheit (9) mit Flüssigkeit (10), der mit dem Ausgang des Rohrheizofens (5) verbunden ist, wobei die Vorauslass-Speichereinheit (9) eine Entladeschnecke (27) zum Entladen der anfallenden Verbindung/Asche (26) und Behälter (11) zur Rückgewinnung von Partikeln, die durch ein elektrisches Feld abgeschieden werden und entlang der Wände der Vorauslass-Speichereinheit (9) absteigen, umfasst, wobei die Vorauslass-Speichereinheit (9) ferner zwei Stäbe (7) umfasst, die an einen 20-kV-Transformator (8) angeschlossen sind, um die Dämpfe (6) einem elektrischen Feld auszusetzen;
- zwei Synthesegasreinigungskammern (12), die jeweils zwei 1500-°C-Widerstände (13) mit zwei Transformatoren (14) umfassen, und an einen weiteren 20-kV-Transformator (15) angeschlossen sind, um die Erzeugung des nachfolgenden elektrostatischen Feldes zu ermöglichen, das Metalle anzieht und durch die Temperatur der Widerstände schädliche Moleküle wie Dioxine und Furane zerstört, wobei die Synthesegasreinigungskammern (12) mit dem Gasausgang der Vorauslass-Speichereinheit (9) verbunden sind;
- ein Gasanalysegerät (16) zur Analyse der Gaszusammensetzung, nach den beiden Synthesegasreinigungskammern (12);
- einen Wärmetauscher (20), der dem Gasanalysator (16) nachgeschaltet ist, um die Gastemperatur zu reduzieren;
- einen Tank (23), der dem Wärmetauscher (20) nachgeschaltet ist, wobei der Tank (23) einen Gasauslass (25) aufweist und Wasser, Salze und eingetauchte Elektroden enthält, die mit Gleichstrom betrieben werden, um die letzten Verunreinigungen, falls vorhanden, durch Gasblasen (24) im Wasser zu beseitigen;
- einen Sammeltank für die kondensierte Flüssigkeit (21), der das Kondensat auffängt, das nach dem Kühlvorgang durch den Wärmetauscher (20) entstehen kann, sodass es bei dessen Einschalten wieder zugeführt werden kann.

2. Vorrichtung nach Anspruch 1, die **dadurch gekennzeichnet ist, dass** der Einfülltrichter (2) und die Vorauslass-Speichereinheit (9) so konfiguriert sind, dass die Verbindung durch Heber in das System ein- bzw. daraus austreten kann, wodurch das System den anoxischen Zustand aufrechterhalten kann.

3. Vorrichtung nach Anspruch 1, die **dadurch gekennzeichnet ist, dass** die Ladeschnecke (4) und der Rohrofen (5) um etwa 45° geneigt sind, wobei die Ladeschnecke über die gesamte Länge des Rohrheizofens (5) führt.

4. Vorrichtung nach Anspruch 1, damit der Einfülltrichter (2) und die Vorauslass-Speichereinheit (9) so konfiguriert sind, dass das System einen konstanten Innenüberdruck zwischen 20 und 50 Millibar (mbar) aufrechterhalten kann.

5. Vorrichtung nach Anspruch 1,die **dadurch gekennzeichnet ist, dass** die Vorauslass-Speichereinheit (9) zwei Stäbe (7) umfasst, die mit einem gleichgerichteten 20-kV-Transformator (8) verbunden sind, der die Erzeugung eines elektrostatischen Feldes ermöglicht, das dazu dient, die Ausgangsmetalle und schädliche Moleküle anzuziehen.

6. Vorrichtung nach Anspruch 1, die **dadurch gekennzeichnet ist, dass** jede der beiden Synthesegasreinigungskammern (12) 2 elektrische Widerstände (13) enthält, die Temperaturen im Bereich von 1500 °C erreichen und dafür konfiguriert ist, mit zwei Transformatoren (14) mit einer Eingangsspannung von 220 Volt und einer Ausgangsspannung von 6,2 Volt, 166 Ampere, 1.024 Watt versorgt und an einen weiteren 20-kV-Transformator (15) angeschlossen zu werden, der so konfiguriert ist, dass er mit Wechselstrom mit 220 Volt und 200 Watt versorgt und mit Gleichstrom gleichgerichtet wird, um die Erzeugung eines elektrostatischen Feldes zu ermöglichen, das dazu dient, die Metalle und andere schädliche Moleküle, einschließlich Dioxine, Furane usw., einzufangen, die durch die hohe Temperatur der Widerstände zerstört werden.

7. Vorrichtung nach Anspruch 1, die **dadurch gekennzeichnet ist, dass** die beiden Synthesegasreinigungskammern (12) voneinander getrennt sind und durch abwechselnden Betrieb die Durchführung der Wartung und die Entnahme der durch das elektrostatische Feld angezogenen Metalle ermöglichen, vor allem aber vermeiden, dass der Prozess unterbrochen werden muss.

## Revendications

1. Un appareil pour la conversion pyrolytique des composés organiques en général, tels que les boues de tannage, le fumier, la biomasse végétale, la biomasse animale, le fumier, les déchets solides municipaux indifférenciés, le lixiviat, en MÉTHANE (CH₄) et **caractérisé par le fait qu'**il comprend:
- une trémie de chargement (2) pour le composé organique (1) contenant du liquide (3);
- une vis de chargement (4) pour le composé organique;
- un four tubulaire de chauffage (5) dans lequel le composé organique introduit par la trémie de chargement (2) contenant du liquide (3) et la vis de chargement (4) est amené à réagir pour être transformé en composés organiques volatils à une température comprise entre 530°C et 570°C;
- une unité de stockage de pré-décharge (9) contenant un liquide (10) relié à la sortie du four de chauffage tubulaire (5), ladite unité de stockage de pré-décharge (9) consistant en une vis de décharge (27) pour décharger le composé/cendres (26) et en récipients (11) pour la récupération des particules séparées par un champ électrique et descendant le long des parois de l'unité de stockage de pré-décharge (9), comprenant en outre deux barres (7) reliées à un transformateur de 20 kV (8) pour soumettre les fumées (6) à un champ électrique;
- deux chambres de purification des gaz de synthèse (12) comprenant chacune deux résistances de 1500°C (13) équipées de deux transformateurs (14), et connectées à un autre transformateur de 20 kV (15) pour permettre l'initiation du champ électrostatique suivant qui attire les métaux et, au moyen de la température des résistances, détruit les molécules nocives, telles que les dioxines et les furanes, alors que les chambres de purification des gaz de synthèse (12) sont connectées à la sortie de gaz de l'unité de stockage de pré-décharge (9);
- un analyseur de gaz (16) pour analyser la composition du gaz, situé en aval par rapport aux deux chambres de purification des gaz de synthèse (12);
- un échangeur de chaleur (20), situé en aval par rapport à l'analyseur de gaz (16), pour faire baisser la température du gaz;
- un réservoir (23) situé en aval par rapport à l'échangeur de chaleur (20), ledit réservoir (23) comprenant une sortie de gaz (25) et contenant de l'eau, des sels et des électrodes immergées alimentées en courant continu pour capturer, le cas échéant, les dernières impuretés en faisant barboter le gaz (24) dans l'eau;
- un réservoir de collecte pour le liquide condensé (21), qui recueille le condensat pouvant se développer après le processus de refroidissement par l'échangeur de chaleur (20), permettant sa réintroduction au début de celui-ci.

2. Un dispositif selon la revendication 1, **caractérisé par le fait que** la trémie de chargement (2) et l'unité de stockage de pré-décharge (9) soient configurées pour permettre au composé d'entrer et de sortir du système par siphonnage, permettant ainsi au système de maintenir son état anoxique.

3. Un dispositif selon la revendication 1, **caractérisé par le fait que** la vis de chargement (4) et le four tubulaire (5) soient inclinés d'environ 45°, et dans lequel la vis de chargement traverse toute la longueur du four tubulaire chauffant (5).

4. Un dispositif selon la revendication 1, selon laquelle la trémie de chargement (2) et l'unité de stockage de pré-décharge (9) soient configurées pour permettre au système de maintenir une surpression intérieure constante comprise entre 20 et 50 millibars (mbar).

5. Un dispositif selon la revendication 1, selon laquelle le réservoir de pré-décharge (9) comprend deux barres (7) reliées à un transformateur de 20 kV rectifié (8) capable de permettre la création d'un champ électrostatique servant à attirer les métaux et les molécules nocives.

6. Un dispositif selon la revendication 1, **caractérisé par le fait que** chacune des deux chambres de purification des gaz de synthèse (12) contienne 2 résistances électriques (13) qui atteignent la région 1500°C configurées pour être alimentées par deux transformateurs (14) avec une tension d'entrée de 220 volts et une tension de sortie de 6,2 volts, 166 ampères, 1024 watts et connectées à un autre transformateur de 20 kV (15) configuré pour être alimenté avec un courant alterné à 220 volts et 200 watts, et rectifié avec un courant continu pour permettre l'amorçage d'un champ électrostatique servant à capturer les métaux et autres molécules nocives, y compris les dioxines, les furannes, etc., qui seront détruites par la température élevée des résistances.

7. Un dispositif selon la revendication 1, **caractérisé par le fait que** les deux chambres de purification des gaz de synthèse (12) soient séparées et permettent leur fonctionnement alterné pour effectuer la maintenance et la collecte des métaux qui ont été attirés par le champ électrostatique, mais, surtout, pour éviter de devoir arrêter le processus.
